# EUROPÄISCHE PATENTSCHRIFT

(11) **EP 1 423 248 B1**
(45) Veröffentlichungstag und Bekanntmachung des Hinweises auf die Patenterteilung: **27.04.2016**
(21) Anmeldenummer: 02774514.0
(22) Anmeldetag: 14.08.2002
(51) Int. Cl.: B29C 45/56, B29C 45/80

(54) **VERFAHREN ZUM HERSTELLEN FLÄCHENARTIGER KUNSTSTOFF-FORMTEILE, INSBESONDERE KUNSTSTOFFSCHEIBEN**
METHOD FOR PRODUCING PLANAR PLASTIC MOULDED PARTS, IN PARTICULAR PLASTIC PANES
PROCEDE POUR PRODUIRE DES PIECES MOULEES PLANES EN MATIERE PLASTIQUE, NOTAMMENT DES PANNEAUX DE VITRAGE EN MATIERE PLASTIQUE

(30) Priorität: 27.08.2001 DE 10141858
(43) Veröffentlichungstag der Anmeldung: 02.06.2004
(60) Teilanmeldung: 10179830.4
(73) Patentinhaber: KraussMaffei Technologies GmbH, 80997 München (DE)
(72) Erfinder: KLOTZ, Bernd, 85232 Bergkirchen (DE)
(74) Vertreter: Wilhelm, Ludwig
(86) Internationale Anmeldenummer: PCT/EP2002/009098
(87) Internationale Veröffentlichungsnummer: WO 2003/018286

(56) Entgegenhaltungen:
- WO-A1-02/30651
- DE-A- 2 265 090
- DE-A- 2 914 076
- DE-B- 1 529 907
- DE-U- 29 811 214
- GB-A- 1 110 534
- JP-A- H0 358 819
- BREITENBACH, JENS: "Spritzprägen und seine Variationen in der Praxis" PLASTVERARBEITER, Bd. 19, Nr. 7, 1968, Seiten 517-524, XP009001827
- PATENT ABSTRACTS OF JAPAN vol. 012, no. 131 (M-688), 22. April 1988 (1988-04-22) -& JP 62 255111 A (MITSUBISHI HEAVY IND LTD), 6. November 1987 (1987-11-06)
- PATENT ABSTRACTS OF JAPAN vol. 012, no. 206 (M-708), 14. Juni 1988 (1988-06-14) & JP 63 009523 A (MITSUBISHI HEAVY IND LTD), 16. Januar 1988 (1988-01-16)
- PATENT ABSTRACTS OF JAPAN vol. 1995, no. 02, 31. März 1995 (1995-03-31) -& JP 06 312444 A (SUMITOMO JUKIKAI PLAST MACH KK;OTHERS: 01), 8. November 1994 (1994-11-08)
- PATENT ABSTRACTS OF JAPAN vol. 016, no. 212 (M-1250), 19. Mai 1992 (1992-05-19) -& JP 04 035922 A (NEC HOME ELECTRON LTD), 6. Februar 1992 (1992-02-06)

## Beschreibung

Verfahren zum Herstellen flächenartiger Kunststoff-Formteile, insbesondere Kunststoffscheiben.

Die Erfindung bezieht sich auf ein Verfahren zum Herstellen von dickwandigen, flächenartigen Kunststoff-Formteilen, insbesondere Kunststoffscheiben.

Insbesondere in der Automobilindustrie gibt es Bestrebungen, Glasscheiben durch Kunststoffscheiben zu ersetzen, die hinsichtlich verschiedener Eigenschaften wie Gewicht oder Splitterbildung Glasscheiben überlegen sind. Andererseits müssen auch Kunststoffscheiben mit sehr guter und reproduzierbarer Oberflächenqualität hergestellt werden, was mit bekannten Verfahren kaum oder nur sehr aufwendig möglich ist, so daß sich Kunststoffscheiben an Kraftfahrzeugen bisher lediglich als Sonnendächer durchgesetzt haben, nicht jedoch als Seiten-, Heck- oder gar Frontscheiben.

Optische Oberflächen bei nicht sehr großflächigen Teilen mit gleichmäßiger Wandstärke werden im Normalfall in einem Spritzgießprozeß hergestellt, wobei Kunststoffmasse in einer Füllphase über kleindimensionierte Kanäle in eine Formkavität eingebracht wird. Weil amorphe Kunststoffe in der Abkühlphase eine hohe Dichtereduktion (Materialschwund, ca. 10 bis 20%) zeigen, wird dieser Materialschwund in einer folgenden Nachdruckphase über Nachfüttern von plastischer Schmelze zum Spritzkolben der Spritzgießmaschine ausgeglichen. Dabei können sich jedoch Inhomogenitäten ergeben, so daß dieses Verfahren für großflächige Teile nicht geeignet ist.

Beim sog. Standardspritzprägeprozeß wird in einer ersten Füllphase in eine vorvergrößerte Kavität Kunststoffmasse eingebracht und anschließend mittels einer Werkzeugbewegung verprägt. Dieses Standard-Spritzprägeverfahren eignet sich für einfache optische Teile wie Linsen, wobei durch das Verprägen Einfallstellen als Folge von Materialschwund vermieden werden. Zwar könnte man dieses Verfahren auch für großflächige Kunststoffteile einsetzen, dabei ist jedoch zu beachten, daß der Prägeweg sehr genau eingehalten werden muß, um reproduzierbare Qualitäten zu erzeugen. Am Beispiel von Automobilverscheibungen sind dies wenige Zehntel Millimeter, die bei den dafür notwendigen großen Maschinen (> 2000 Tonnen Schließkraft) nur schwer reproduzierbar sind.

Varianten des Spritzprägeverfahrens sind beispielsweise aus der EP-A-0144622 und der US-A-4828769 bekannt, bei denen während des Prägens Material aus der Kavität herausgepresst wird bzw. der Prägevorgang schon während des Einfüllens begonnen wird.

Die WO 98/10417 beschreibt ein Verfahren zum Herstellen sehr dünnwandiger Kunststoffteile wie CDs. Bei diesem Verfahren wird Kunststoffmasse so in eine Form eingespritzt, daß vor dem vollständigen Füllen sich die Form öffnet.

Aus der JP 09 174631 A ist ein Verfahren zum Herstellen von Kunststoff-Formteilen bekannt, wobei zwei Formhälften in der Formtrennebene mit ihren einander zugewandten Flächen auf Anschlag zugefahren werden und Kunststoffmaterial in die so gebildete Kavität eingespritzt wird. Nachdem sich an der Kavitätenfläche eine Haut gebildet hat, wird weiteres Kunststoffmaterial eingespritzt und die Formhälften gegen die Schließkraft aufgefahren. Dabei bildet sich ein Spalt zwischen den Formhälften, der von dem Hautmaterial überbrückt wird, so daß kein Material aus der Kavität austreten kann. Nachfolgend werden die Formhälften wieder bis auf Anschlag zusammengefahren.

Weitere Spritzprägeverfahren zur Schwindungskompensation sind aus der JPH0358819, den JPH0935922 und den JPS6225511 bekannt. Aus der WO 98/53957 ist eine Form mit einem elastisch gelagerten Kern bekannt, der sich beim Einspritzen von Kunststoffmasse verlagert, um anschließend Schwindungsverluste auszugleichen. Durch die elastische Lagerung bildet der Kern ein schwimmendes System, so daß es fraglich erscheint, ob damit genau definierte Endwandstärken erzielbar sind.

Der Erfindung liegt die Aufgabe zugrunde, ein Verfahren anzugeben, mit denen großflächige Kunststoffteile mit guten optischen Eigenschaften hergestellt werden können.

Diese Aufgabe erfolgt durch ein Verfahren gemäß Anspruch 1; die abhängigen Ansprüche betreffen vorteilhafte Weiterentwicklungen der Erfindung.

Erfindungsgemäß wird vorgeschlagen, zunächst die Formkavität eines Formwerkzeuges vollständig zu füllen und anschließend weiteres Material derart nachzufüllen, daß sich die

Form aufdehnt (aufatmet). Erfindungsgemäß startet somit der Prägeprozeß bei geschlossenem Werkzeug, so daß das Problem des sehr genauen Prägeweges nicht auftritt.

Beim Standardspritzgießen ist die Dicke des Kunststofformteils stark abhängig von der Kavitätendicke. Diese ist werkzeuggeometrisch genau definiert. Anders als bei Einspritzprägeprozessen wird erfindungsgemäß die Kavität jedoch gezielt und gewollt in einen schwimmenden Zustand gebracht. Die Teilendicke ist somit nicht durch die Kavitätendicke definiert sondern durch die Dosiergenauigkeit. Mittels eines eingebauten, hochauflösenden Wegaufnehmers ist es möglich, beim erfindungsgemäßen Atmungsprägen Teilendwandstärken von der Exaktheit wie beim Standardspritzgießen zu erzeugen, jedoch mit deutlich verbesserter Homogenität des gefertigten Teils und damit mit verbesserten optischen Eigenschaften.

Beim Standardspritzprägen müssen sehr genaue Prägewege von wenigen Hundertstel Millimeter realisiert werden, um ein reproduktionsgenaues Produzieren zu ermöglichen. Dies ist bei Großmaschinen nicht oder nur schwer möglich, wenn man Plattengrößen von mehreren Quadratmetern betrachtet.

Weil das Spritzgießwerkzeug beim Atmungsprägen im ersten Prozeßabschnitt vollständig geschlossen wird, kann der Prägeprozeß nach der Füllphase aus einer definierten Position begonnen werden. Die Reproduktionsgenauigkeit des Prägeprozesses ist somit eine Funktion der Dosiergenauigkeit der Einspritzeinheit und des Schließkraftprofils.

Ein einseitiges Aufatmen einer Schließeinheit kann dadurch zustande kommen, daß eine großflächige Kavität von einer Seite angespritzt wird, wobei im Bereich des Angusses ein erhöhter Innendruck auftritt, oder daß die Werkzeugkavitäten unsymmetrisch bezüglich der Schließeinheit sind. Diesem Effekt kann entgegengewirkt werden,indem auf der Seite, wo eine einseitig erhöhte resultierende Öffnungskraft erzeugt wird, eine gegenläufige höhere Schließkraft eingeleitet werden kann.

Dieser Prozeß kann beispielsweise dadurch realisiert werden, daß einseitiges Aufatmen gemessen wird und die Schließzylinder auf der Seite der einseitigen Öffnung mit einer höheren Schließkraft versorgt werden als auf der anderen Seite. Dieser Prozeß kann auch geregelt erfolgen, so daß die Form absolut parallel aufatmet.

Spritzgießmaschinen weisen in der Regel eine feste Formaufspannplatte und eine dazu parallele bewegbare Aufspannplatte auf. Die Formaufspannplatten tragen jeweils eine Formhälfte, und durch Bewegen der beweglichen Formaufspannplatte wird die Form mit einer einstellbaren Schließkraft verschlossen. Der festen Formaufspannplatte ist in der Regel eine Schneckeneinheit zugeordnet, wobei in der Schneckeneinheit plastifiziertes Kunststoffmaterial über einen Angußkanal durch die feste Formaufspannplatte in die Kavität der Form eingeleitet wird.

Die bewegliche Formaufspannplatte wird über Antriebe bewegt, die auch die Schließkraft ausüben. Diese sind beispielsweise vier Hydraulikzylinder, die bei rechteckigen Platten beispielsweise im Bereich der Ecken angreifen; auch Elektroantriebe werden eingesetzt.

Spritzgießmaschinen der oben beschriebenen Bauart sind allgemein bekannt (beispielsweise Baureihe C oder MC der Krauss Maffei Kunststofftechnik GmbH) und werden deshalb nicht näher erläutert.

Erfindungsgemäß kann an der beweglichen Aufspannplatte mindestens ein Weggeber vorgesehen sein, der bei der Nachfüllung der Kavität ein Aufatmen der Form und eine damit verbundene Verlagerung der beweglichen Aufspannplatte ermittelt. Auf diese Weise kann der Nachfüllvorgang soweit durchgeführt werden, bis die Formaufspannplatte bzw. die Form eine präzise Position erreicht hat.

Bevorzugt sind mehrere Weggeber vorgesehen, insbesondere im Bereich der Antriebe. Kommt es zu unterschiedlichen Bewegungen in unterschiedlichen Bereichen der Formaufspannplatte, so kann die Schließkraft des Antriebs, in dessen Bereich die größte Verlagerung auftritt, erhöht werden bzw. in Bereichen, in denen die geringste Verlagerung auftritt, vermindert werden. Auf diese Weise kann ein exakt paralleler Verlauf der Formaufspannplatte und damit ein exakt paralleles Aufatmen sichergestellt werden. Dies gestaltet sich insbesondere bei hydraulischen Maschinen einfach, wenn die Hydrauliksysteme der einzelnen Antriebe miteinander kommunizieren, da in diesem Fall der Ausgleich automatisch erfolgt.

Damit die Formkontur beim erfindungsgemäßen Verfahren nicht überspritzt werden kann, werden vorzugsweise an sich bekannte Tauchkantenwerkzeuge verwendet, bei denen sichergestellt ist, daß auch bei einer Bewegung der Formhälfte kein Material aus der Form auftritt.

Ein Ausführungsbeispiel der Erfindung wird anhand der beigefügten Zeichnung erläutert. Es zeigen:
- Fig. 1 bis 3: einen schematischen Querschnitt durch ein Formwerkzeug in verschiedenen Phasen eines Herstellungsvorganges und
- Fig. 4: Graphen für verschiedene Parameter im Spritzgießvorgang.

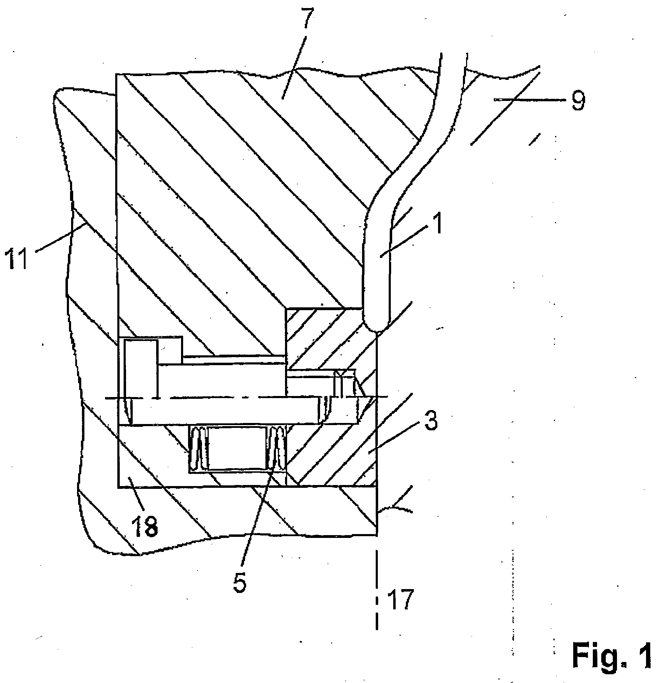

Gemäß Fig. 1 ist eine bewegliche Formhälfte 7 auf einer beweglichen Formaufspannplatte 11 angebracht und bildet zusammen mit einer feststehenden. Formhälfte 9, die auf einer nicht dargestellten festen Formaufspannplatte angebracht ist, eine Kavität 1. Der Rand der Kavität 1 wird durch Tauchkantenleisten 3 begrenzt, die sich über Tellerfedern 5 an einem Lager 18 oder dergleichen an der beweglichen Formaufspannplatte 11 abstützen. Die Tauchkantenleisten 3 sind durch die Tellerfedern 5 so vorgespannt, daß sie in der Formentrennebene 17 sich an der feststehenden Formhälfte abstützen.

In dem dargestellten Zustand beginnt der im Folgenden erläuterte Prozeßablauf.

### 1. Einspritzen bis zur vollständigen Füllung der Kavität

Die Einspritzphase erfolgt wie beim Standardspritzgießverfahren über mindestens einen nicht dargestellten Anguß. Der Einspritzvorgang wird entweder schneckenwegabhängig, zeitabhängig, massedruckabhängig, hydraulikdruckabhängig oder innendruckabhängig beendet, wobei mindestens am Ende der Einspritzphase die Kavität 1 vollständig gefüllt ist.

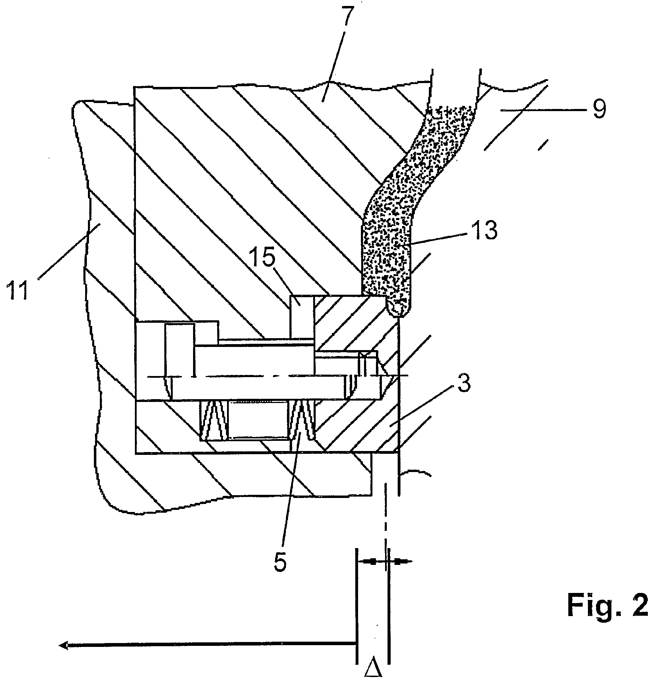

### 2. Atmungsprägen der Kavität bis zu einer definierten Wandstärke (Fig. 2).

Durch einen weiteren Einspritzvorgang (Nachfüllen von Kunststoff 13) wird die Kavität in einer Atmungsphase bis zu einer definierbaren Teildicke Δ vergrößert. Dabei halten die Tellerfedern 5 durch die Verspannung die Tauchkantenleisten 3 in Kontakt mit der feststehenden Formhälfte. Der Prozeßabschnitt wird schneckenwegabhängig oder schließenwegabhängig beendet. Zu bevorzugen ist ein schließenwegabhängiger Stop des Aufatmungsvorgangs, um eine sehr genaue Dosierung der Kunststoffmasse zu ermöglichen, so daß reproduktionsgenau produziert werden kann.

Anstatt einem Weggeber an der beweglichen Aufspannplatte anzubringen, ist es deshalb vorteilhaft, einen hochauflösenden Weggeber nahe der Anspritzstelle in das Formwerkzeug einzubringen, so daß bereits ein leichtes Aufatmen von wenigen Zehntel Millimetern zu einem Signal verwertet werden kann. Der übliche Atmungsweg Δ liegt minimal bei dem Schwindungsvolumen der Teildicke und ist u.a. stark materialabhängig. Bei amorphen Kunststoffen wie PC, PMMA od. dgl. liegt der prozentuale Wert bei etwa 8 bis 15% der Teilwandstärke. Bei üblichen Wandstärken von vier bis sechs Millimetern liegt also der Atmungsweg bei > 0,4 mm. Maximalwerte sind bei etwa 0,9 mm zu finden.

Dabei sollte vorzugsweise in dieser Phase der erreichte Innendruck konstant gehalten werden. Nicht zwingend aber verteilhaft sollte deshalb ein Innendruckaufnehmer zur Prozeßregelung in das Werkzeug eingebracht werden (innendruckabhängiges Schließkraftprofil).

### 3. Kompressionsphase

Diese Phase ist nicht zwingend aber optional von Vorteil für das gleichmäßige Ausprägen der Teiloberfläche.

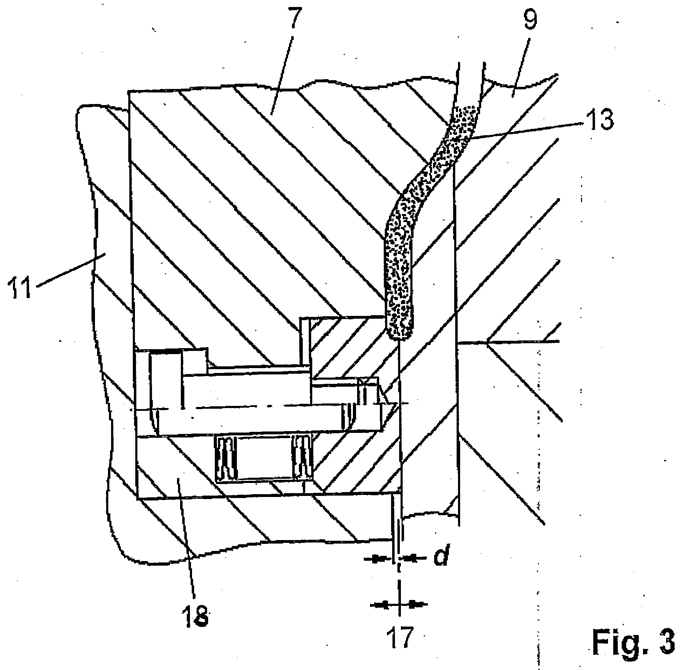

4. In der folgenden Kompressionsphase (Fig. 3) wird die Kunststoffmasse verdichtet gehalten, so daß der Materialschwund nicht zu Einfallstellen führt. Anzustreben ist auch in dieser Phase ein konstanter Innendruckverlauf, der durch ein innendruckabhängige Schließkraftprofil erzeugt werden kann. Andererseits kann auch mit einer konstanten Schließkraft gearbeitet werden. Während der gesamten Kompressionzeit sollte die Schließenbewegung gegen die schwindende Kunststoffmasse wirken, so daß keine Materialeinfallstellen an der Teiloberfläche resultieren. Es ist deshalb vorteilhaft, wenn bei Zyldusende eine Restatmungsöffnung vorliegt, die sicherstellt, daß während des gesamten Zyklusablaufs die Kunststoffmasse unter Druck gehalten wird.

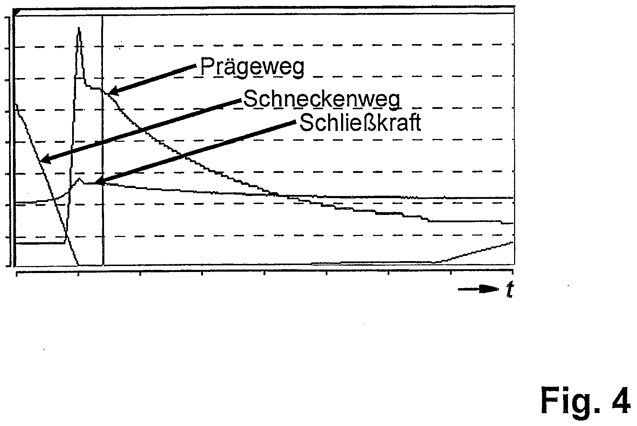

Fig. 4 zeigt Graphen des zeitlichen Verlaufs von Prägeweg, Schneckenweg und Schließkraft für einen Einspitzvorgang.

Nachdem die erforderliche Menge Kunststoffe eingespritzt ist (Schneckenweg 0) hat der Prägeweg seinen Maximalwert erreicht, daß heißt die Form ist maximal aufgedehnt. Anschließend nimmt der Prägeweg ab, bis er seinen Endwert (d in Fig. 3) erreicht hat. Dabei bleibt die Schließkraft während des sogenannten Atmungsprägens im Wesentlichen konstant.

## Patentansprüche

1. Verfahren zum Herstellen eines Kunststoff-Formteils, insbesondere eines dickwandigen, flächenartigen Formteils wie einer Scheibe, unter Verwendung eines Tauchkantenwerkzeugs (7, 3), mit den Schritten,
(a) Verschließen der Kavität (1) des Tauchkantenwerkzeugs (7, 3) mit Schließkraft,
(b) Vollständiges Auffüllen der Kavität (1) mit Kunststoff (13), wobei die Größe der Kavität (1) während des Auffüllens konstant gehalten wird,
(c) Nachfüllen von Kunststoff (13) zum Ausgleich von Materialschwund derart, daß sich das Tauchkantenwerkzeug (7, 3) entgegen der Schließkraft bis zu einer definierbaren Teildicke Δ aufdehnt,
(d) Zufahren des Tauchkantenwerkzeugs (7, 3) bis zu einer Restatmungsöffnung und Ausformen des Kunststofformteils mit anliegender Schließkraft, so daß die Kunststoffmasse (13) verdichtet gehalten wird,
(e) Entformen des Kunststoffteils.

2. Verfahren nach Anspruch 1,
**dadurch gekennzeichnet,**
**daß** man das Aufdehnen über den Verfahrweg einer Schnecke steuert.

3. Verfahren nach Anspruch 1,
**dadurch gekennzeichnet,**
**daß** man das Nachfüllen über die Aufdehnungsbewegung des Tauchkantenwerkzeugs (7, 3) steuert.

4. Verfahren nach einem der Ansprüche 1 bis 3.
**dadurch gekennzeichnet,**
**daß** man den Innendruck in der Form mißt und ein innendruckabhängiges Schließkraftprofil anlegt.

5. Verfahren nach einem der Ansprüche 1 bis 4,
**dadurch gekennzeichnet,**
**daß** man an Stellen, die einem Anguß näher liegen, eine höhere Schließkraft an das Tauchkantenwerkzeug (7, 3) anlegt als an Stellen, die weiter vom Anguß entfernt sind.

6. Verfahren nach einem der Ansprüche 1 bis 3,
**dadurch gekennzeichnet,**
**daß** man beim Ausformen des Kunststoffteils die Schließkraft konstant hält.

## Claims

1. A method for producing a plastic moulded part, in particular a thick-walled planar moulded part such as a pane, using an immersion edge tool (7, 3), with the steps
(a) closing of the cavity (1) of the immersion edge tool (7, 3) with a closing force,
(b) complete filling of the cavity (1) with plastic (13), wherein the size of the cavity (1) is kept constant during the filling,
(c) refilling of plastic (13) for the compensation of material shrinkage such that the immersion edge tool (7, 3) expands in opposition to the closing force up to a definable partial thickness Δ,
(d) closing the immersion edge tool (7, 3) up to a residual breathing opening and shaping of the plastic moulded part with closing force being applied, so that the plastic material (13) is kept compressed,
(e) demoulding the plastic part.

2. The method according to Claim 1,
**characterized in that**
the expansion is controlled via the travelling path of a worm.

3. The method according to Claim 1,
**characterized in that**
the refilling is controlled via the expansion movement of the immersion edge tool (7, 3).

4. The method according to one of Claims 1 to 3,
**characterized in that**
the internal pressure is measured in the mould and a closing force profile is applied dependent on the internal pressure.

5. The method according to one of Claims 1 to 4,
**characterized in that**
at locations which lie nearer to a sprue, a higher closing force is applied onto the immersion edge tool (7, 3) than at locations which are further distant from the sprue.

6. The method according to one of Claims 1 to 3,
**characterized in that**
on shaping of the plastic part, the closing force is kept constant.

## Revendications

1. Procédé destiné à la fabrication d'une pièce moulée en plastique, en particulier d'une pièce moulée à paroi épaisse, de type plate, comme un disque, employant un outil d'estampage (7, 3), comprenant les étapes
(a) de fermeture de la cavité (1) de l'outil d'estampage (7, 3) avec une force de fermeture,
(b) de remplissage complet de la cavité (1) avec du plastique (13), sachant que la taille de la cavité (1) est maintenue constante pendant le remplissage,
(c) de ré-remplissage de plastique (13) pour compenser la perte de matière de telle sorte que l'outil d'estampage (7, 3) s'étire contre la force de fermeture, jusqu'à une épaisseur partielle Δ pouvant être définie,
(d) de rapprochement de l'outil d'estampage (7, 3) jusqu'à une ouverture de gonflement restante et moulage de la pièce moulée en plastique avec la force de fermeture présente, de telle sorte que la masse de plastique (13) est maintenue compressée,
(e) de démoulage de la pièce de plastique.

2. Procédé selon la revendication 1, **caractérisé en ce que** l'étirement est commandé sur le trajet de déplacement d'une vis sans fin.

3. Procédé selon la revendication 1, **caractérisé en ce que** le ré-remplissage est commandé sur le mouvement d'étirement de l'outil d'estampage (7, 3).

4. Procédé selon l'une des revendications 1 à 3, **caractérisé en ce que** la pression intérieure est mesurée dans le moule et qu'un profil de force de fermeture qui est fonction de la pression interne est établi.

5. Procédé selon l'une des revendications 1 à 4, **caractérisé en ce que** sur les endroits qui sont plus proches d'un culot d'injection, la force de fermeture sur l'outil d'estampage (7, 3) est plus élevée que sur les endroits qui sont plus éloignés du culot d'injection.

6. Procédé selon l'une des revendications 1 à 3, **caractérisé en ce que** la force de fermeture est maintenue constante pendant le moulage de la pièce plastique.
